# EUROPEAN PATENT APPLICATION

(11) **EP 2 602 464 A2**
(43) Date of publication of application: **12.06.2013**
(21) Application number: 12195763.3
(22) Date of filing: 05.12.2012
(51) Int. Cl.: F02K 1/76, F02K 1/68

(54) **Common control for thrust reverser and variable area fan nozzle**

(30) Priority: 08.12.2011 US 201161568489 P; 07.03.2012 US 201261607712 P; 21.03.2012 US 201213426240
(71) Applicant: Honeywell International Inc., Morristown, NJ 07962-2245 (US)
(72) Inventor: Vaughan, Ron, Morristown, NJ New Jersey 07962-2245 (US); Portolese, Larry, Morristown, NJ New Jersey 07962-2245 (US); McGill, Michael, Morristown, NJ New Jersey 07962-2245 (US); Chakkera, Kevin K., Morristown, NJ New Jersey 07962-2245 (US); Behnke, Mark E., Morristown, NJ New Jersey 07962-2245 (US); Morris, John Taft, Morristown, NJ New Jersey 07962-2245 (US)
(74) Representative: Houghton, Mark Phillip

(57) **Abstract**

A case assembly (102) for an aircraft is provided. The assembly includes a thrust reverser actuation system (TRAS) (112) configured to provide braking assistance to the aircraft; a variable area fan nozzle (VAFN) (114) system configured to adjust an engine exhaust of the aircraft; and a common control group (600) coupled to the TRAS (112) and the VAFN (114) system for controlling operation of the TRAS (112) and the VAFN (114) system.

## Description

### CROSS-REFERENCE TO RELATED APPLICATION

This application claims the benefit of U.S. Provisional Application No. 61/568,489, filed December 8, 2011 and 61/607,712, filed March 7, 2012, the entirety of each being hereby incorporated by reference.

### TECHNICAL FIELD

The present invention relates to aircraft case assemblies, particularly case assemblies with aircraft thrust reverser actuation systems (TRAS) and aircraft variable area fan nozzle (VAFN) systems.

### BACKGROUND

Conventional gas turbine engines generally include a fan section and a core engine with one or more compressors, a combustion section, and one or more turbines. The fan section and the core engine are disposed about a longitudinal axis and are enclosed within a case assembly. During operation, the fan section induces a first portion of air into the core engine and a second portion of air into a bypass flow path.

In the core engine, air is compressed, mixed with fuel, combusted, expanded through the turbines, and subsequently discharged from the core engine through an exhaust nozzle system. The bypass air is directed through the bypass flow path, disposed radially outward of the primary airflow path, and discharged through an annular fan exhaust nozzle system defined between a fan case and an inner cowl. A majority of thrust is produced by the pressurized fan air discharged through the fan exhaust nozzle, the remaining thrust being provided from the combustion gases discharged through the core exhaust nozzle.

The engine may include a thrust reverser system and a fan nozzle system to manipulate air flow through the bypass flow path. Thrust reversers function to enhance the braking of the aircraft during landing. When deployed, a thrust reverser redirects the rearward thrust via the bypass flow path of the jet engine to a forward or semi-forward direction to decelerate the aircraft upon landing. When in the stowed position, the thrust reversers are in a position that generally does not redirect the engine thrust.

The nozzle system may be positioned on or adjacent to the transcowls of a thrust reverser system. Some gas turbine engines have implemented variable area fan nozzles. The variable area fan nozzles provide a smaller fan exit nozzle diameter to optimize operation during certain conditions. However, providing variable area fan nozzles or modifications thereto may result in increased complexity and decreased fuel efficiency.

Accordingly, it is desirable to provide improved aircraft thrust reverser actuation systems and aircraft variable area fan nozzle systems that do not increase complexity or weight of the aircraft. Furthermore, other desirable features and characteristics of the present invention will become apparent from the subsequent detailed description of the invention and the appended claims, taken in conjunction with the accompanying drawings and this background of the invention.

### BRIEF SUMMARY

In accordance with an exemplary embodiment, a case assembly for an aircraft is provided. The assembly includes a thrust reverser actuation system (TRAS) configured to provide braking assistance to the aircraft; a variable area fan nozzle (VAFN) system configured to adjust an engine exhaust of the aircraft; and a common control group coupled to the TRAS and the VAFN system for controlling operation of the TRAS and the VAFN system.

In accordance with another exemplary embodiment, a control group is provided for a thrust reverser actuation system (TRAS) and a variable area fan nozzle (VAFN). The control group includes a common controller configured to control the TRAS and the VAFN; and a flow control unit configured to provide fuel to a first fuel driven motor associated with the TRAS and a second fuel driven motor associated with the VAFN.

### BRIEF DESCRIPTION OF THE DRAWINGS

The present invention will hereinafter be described in conjunction with the following drawing figures, wherein like numerals denote like elements, and

FIG. 1 is a perspective view of an aircraft engine system according to an exemplary embodiment;

FIG. 2 is a schematic cross-sectional view of the engine system of FIG. 1 according to an exemplary embodiment;

FIG. 3 is a partial, more detailed cross-sectional view of the engine system of FIG. 2 with a transcowl and nozzle in a first position according to an exemplary embodiment;

FIG. 4 is a partial, more detailed cross-sectional view of the engine system of FIG. 2 with a transcowl in a second position according to an exemplary embodiment;

FIG. 5 is a partial, more detailed cross-sectional view of the engine system of FIG. 2 with a nozzle in a second position according to an exemplary embodiment; and

FIG. 6 is a simplified functional schematic representation of an actuator system associated with the engine system of FIG. 2 according to an exemplary embodiment.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

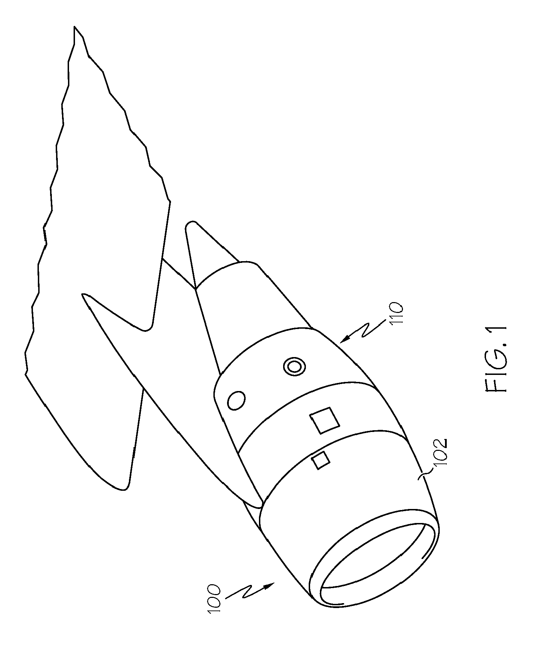

FIG. 1 is a perspective view of portions of an aircraft jet engine system 100 with a fan case 102. Typically, the fan case 102 encloses a turbofan engine, as described below, and mounts the engine for aircraft operation. As also discussed below, the engine system 100 may include a case assembly 110 to optimize operation.

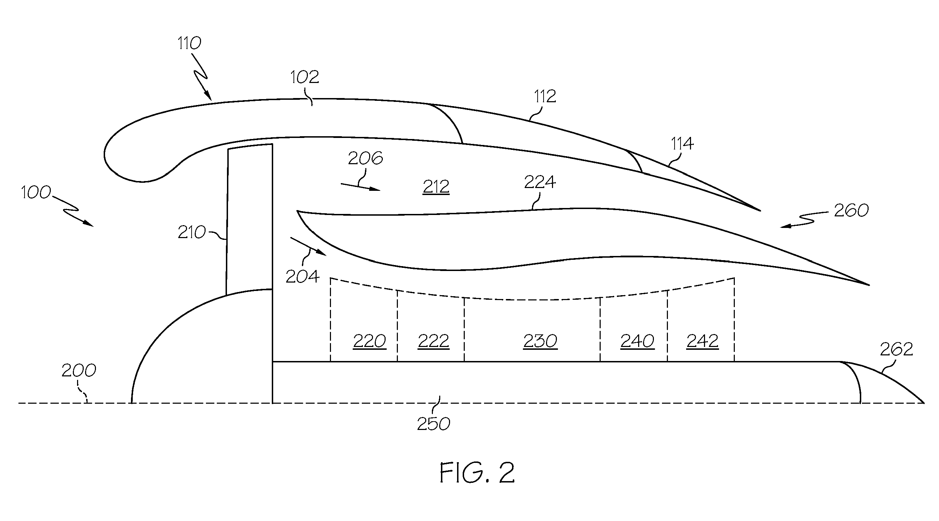

FIG. 2 is a schematic cross-sectional view of the engine system 100 of FIG. 1. The engine system 100 is circumferentially disposed about an engine centerline 200. The engine system 100 includes a fan 210, a low pressure compressor 220, a high pressure compressor 222, a combustion section 230, a high pressure turbine 240, and a low pressure turbine 242 arranged around an engine shaft 250. Typically, air is compressed in the compressors 220, 222, mixed with fuel and burned in the combustion section 230, and expanded in the turbines 240, 242. The turbines 240, 242 include rotors coupled for rotation with the engine shaft to drive the compressors 220, 222 and the fan 210 in response to the expansion of combustion gases.

In the example shown, the engine system 100 is a gas turbine bypass turbofan arrangement in which the diameter of the fan 210 is larger than that of the compressors 220, 222. As such, the case (or nacelle) 102 extends circumferentially about the fan 210 to define a bypass air flow path 212 extending between the case 102 and an inner cowl 224, which generally surrounds the compressors 220, 222, combustion section 230, and turbines 240, 242.

In operation, the fan 210 draws air into the engine system 100 as core flow 204 and into the bypass air flow path 212 as bypass air flow 206. A rear exhaust 260 discharges the bypass air flow 206 from the engine system 100, and the core flow 204 is discharged from a passage between the inner cowl 224 and a tail cone 262 to produce thrust.

As described in greater detail below, the case assembly 110 generally includes a thrust reverser actuation system (TRAS) 112 and a variable area fan nozzle (VAFN) system 114 to manipulate bypass air flow 206 in the flow path 212. In general, the TRAS 112 functions to selectively block the bypass air flow path 212 of the engine to provide braking to the aircraft, e.g., as redirected thrust. The VAFN system 114 functions to selectively adjust the flow area of the bypass air flow path 212 to optimize engine operation.

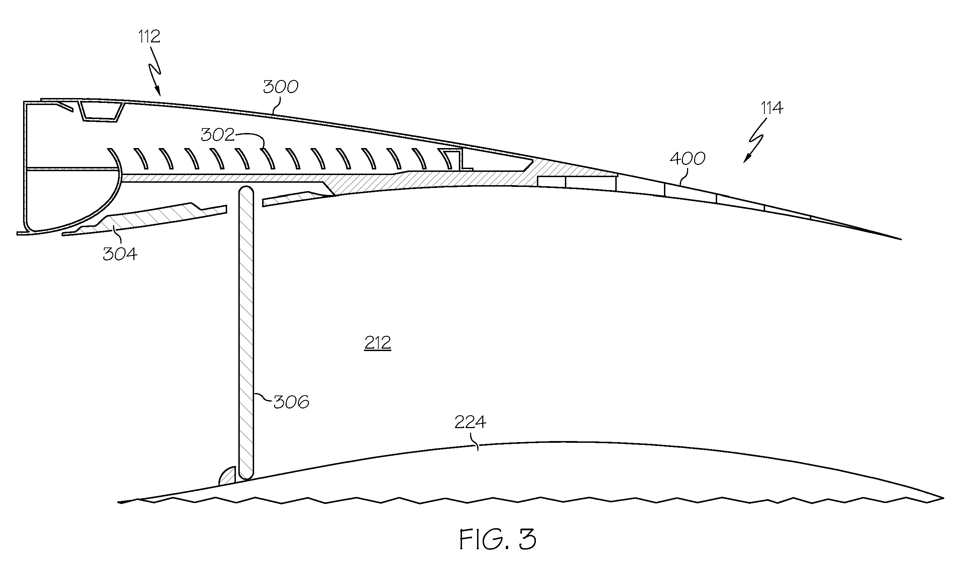

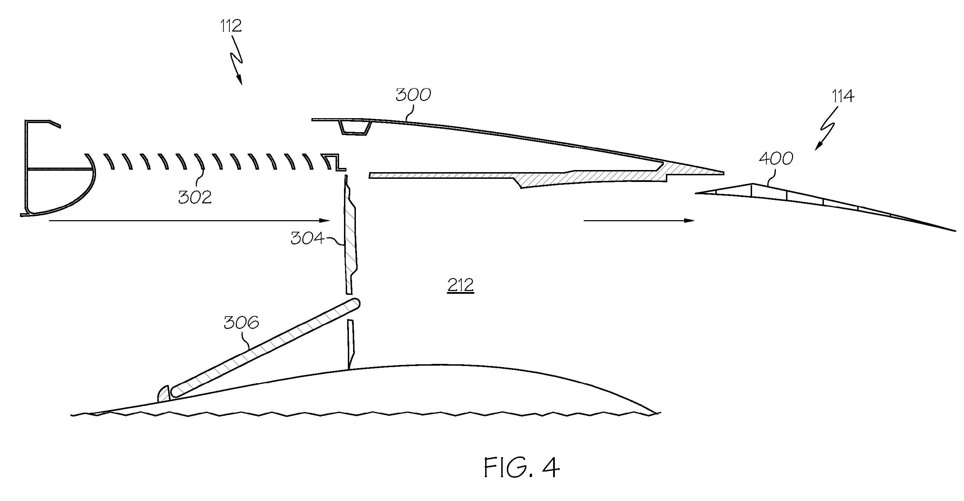

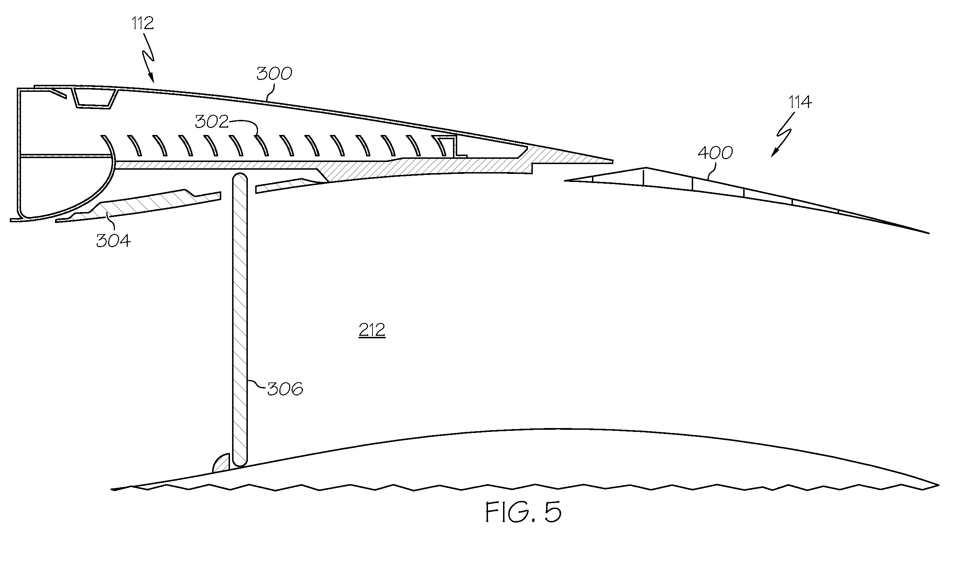

FIGS. 3-5 illustrate the operation of the TRAS 112 and VAFN system 114 relative to the bypass air flow path 212. In particular, FIG. 3 is a partial, more detailed cross-sectional view of the aircraft engine of FIG. 2 with the TRAS 112 and VAFN system 114 in a first position. FIG. 4 is a partial, more detailed cross-sectional view of the aircraft engine of FIG. 2 with the TRAS 112 in a second position, and FIG. 5 is a partial, more detailed cross-sectional view of the aircraft engine of FIG. 2 with the VAFN system 114 in a second position.

As is described in greater detail below, the TRAS 112 includes one or more semi-circular transcowls (or "reverser cowls") 300 that are positioned circumferentially on the outside of the jet engine fan case 102 (FIG. 1), typically on a fixed structure or torque box. In one exemplary embodiment, the TRAS 112 includes a pair of semi-circular transcowls 300 that extend around the case 102. The VAFN system 114 includes trailing edge fan nozzles 400 arranged at the downstream ends of the transcowls 300. Additional details about the operation and deployment of the transcowls 300 and nozzles 400 will be provided below with respect to FIGS. 3-5 prior to a more detailed description of the actuators that adjust the transcowls 300 and nozzles 400.

As shown more particularly in FIG. 3, the transcowls 300 cover a plurality of vanes 302, which may be cascade-type vanes that are positioned between the transcowls 300 and a bypass air flow path 212. When in the stowed position, as depicted in FIG. 3, the transcowls 300 are pressed against one or more stow seals, which keep air in the bypass air flow path 212. The transcowls 300 are mechanically linked to a series of blocker doors 304 via a drag link 306. In the stowed position, the blocker doors 304 form a portion of an outer wall and are therefore oriented parallel to the bypass air flow path 212.

However, as is shown in FIG. 4, when the TRAS 112 is commanded to deploy, the transcowls 300 are translated aft, causing the blocker doors 304 to rotate into a deployed position, such that the bypass air flow path 212 is blocked. This also causes the vanes 302 to be exposed and the bypass air flow to be redirected out the vanes 302. The redirection of the bypass air flow in a forward direction creates a reverse thrust and thus works to slow the airplane.

Now referring FIG. 5, which depicts the TRAS 112 in the stowed position, the VAFN system 114 may selectively adjust the nozzles 400 mounted on the trailing edges of the transcowls 300 to optimize the engine performance under different flight conditions. The nozzles 400 may be nozzle-like annular airfoil structures selectively translated (i.e., moved fore and aft) to vary the fan nozzle's exit area and to adjust an amount of engine bypass flow. As compared to FIG. 3, the nozzles 400 in FIG. 5 have been translated aft. Any number of nozzles 400 may be provided, although in one exemplary embodiment, two nozzles 400 are provided.

As such, the transcowls 300 and nozzles 400 are selectively translated with one or more actuation systems. In one exemplary embodiment, the nozzles 400 are only operated when the transcowl 300 is in the stowed position. In other words, the nozzles 400 are not operated when the aircraft is landing in this exemplary embodiment. Other embodiments may have different configurations.

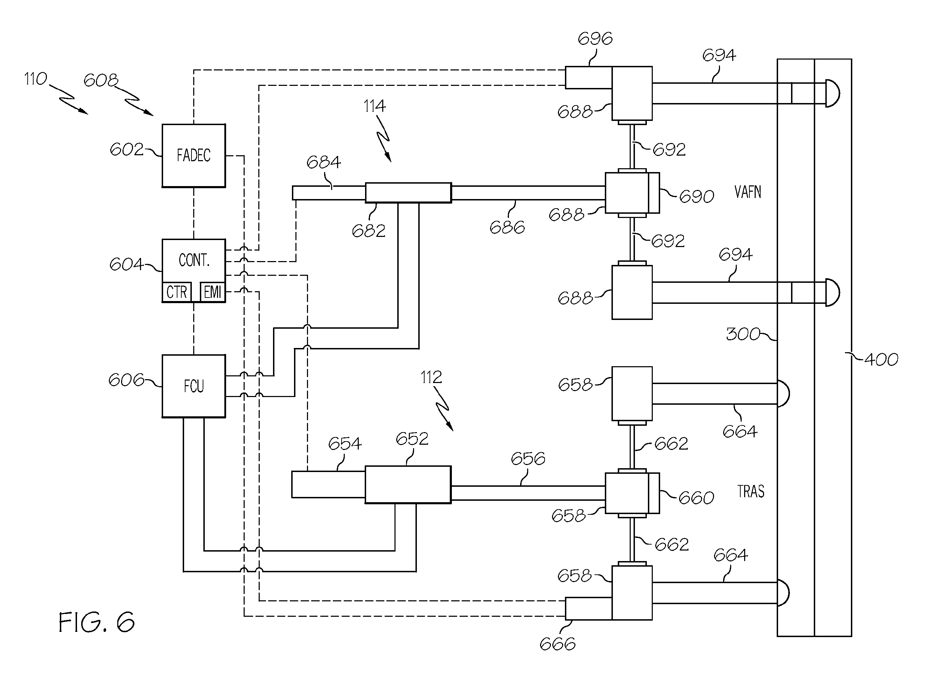

FIG. 6 is a simplified functional schematic representation of an actuation system 600 of the case assembly 110 according to a first exemplary embodiment. In general, the actuation system 600 modulates the deployment and stowing of the thrust reverser actuation system (TRAS) 112 and the variable area fan nozzle (VAFN) system 114. The actuation system 600 functions to retract and deploy the transcowls 300 of the TRAS 112 and the nozzles 400 of the VAFN. Although one set of transcowl 300 and nozzle 400 is shown, more than one may be provided around the periphery of the engine system 100 (FIG. 1), including two transcowls 300 and two nozzles 400.

In general, the actuation system 600 may include a Full Authority Digital Engine Controller (FADEC) 602, a low voltage controller 604, and a fuel control unit 606 that collectively provide fuel, power, and control to the TRAS 112 and VAFN system 114. The (FADEC) 602, a low voltage controller 604, and a fuel control unit 606 may collectively be referred to as a control group 608, and may be separate components or integrated into one or more components. As also described in greater detail below, the TRAS 112 includes a fuel-driven motor 652, a brake (or lock) 654, a speed snubber 656, one or more gear boxes 658, a manual drive 660, one or more flexible shafts 662, one or more actuators 664, and one or more sensors 666. The VAFN system 114 includes a fuel-driven motor 682, a brake (or lock) 684, a speed snubber 686, one or more gear boxes 688, a manual drive 690, one or more flexible shafts 692, one or more actuators 694, and one or more sensors 696.

In general, the FADEC 602, which may form part of a broader aircraft control system, provides deploy and stow commands for the TRAS 112 and VAFN system 114 based on signals from a pilot, an aircraft controller, and sensor signals, such as from the sensors 666 and 696. In particular, the FADEC 602 provides such commands to the low voltage controller 604. In one exemplary embodiment, in addition to the commands from the FADEC 602, the low voltage controller 604 may receive arming commands for the TRAS 112 and VAFN 114 from the aircraft controller and/or the pilot. In response, the low voltage controller 604 provides command signals and/or power to the TRAS 112 and/or the VAFN system 114, as described below, and commands signals and/or power to the fuel control unit 606. Typically, even though the controller 604 is common to the case assembly 110, the command signals for the TRAS 112 and the command signals for the VAFN 114 are segregated from one another. This prevents or mitigates signal interference between the respective actuation systems. However, the common controller 604 does enable a sharing of resources and space, including common power distribution, interconnects, filtering, and hardware.

The low voltage controller 604 may include, for example, EMI (electromagnetic interference) filters. As noted above, the EMI filter may be common for input signals associated with the TRAS 112 and VAFN 114.

The controller 604 may take the form of a power drive circuit with a contactor arrangement controlling which of the motors 652, 682, described below, receive power from the circuit via power supply lines. Switching of the contactor arrangement in this manner prevents undesired actuation of the VAFN system 114 or TRAS 112.

In response to control signals from the controller 604, the fuel control unit 606 provides the necessary amount of fuel to the TRAS 112 and/or the VAFN system 114 to effectuate the command, as also described below. In one exemplary embodiment, the fuel control unit 606 may include a 2-stage EHSV for speed control with high pressure gain for minimizing hysteresis and threshold issues. For example, such a EHSV may be controlled with a milliamp current drive signals from the low voltage controller 604 with a linear relationship between milliamp command and motor speed. Solenoids may be used in some situations. In general, the fuel control unit 606 is configured to, in response to commands from the controller 604, selectively supply fuel to the motors 652 and 682.

In one exemplary embodiment, the low voltage controller 604 is supplied with power from a 28VDC power supply, although other power arrangements may be provided. In general, the controller 604 requires relatively low voltages, e.g., less than 110V. The fuel control unit 606 may form part of the larger fuel system and/or receive fuel from the fuel system for the engine system 100 (FIG. 2). The case assembly 110 may additionally receive inputs (e.g., arm and disarm commands) from the aircraft controller.

Typically, the command and control functions associated with the fuel-driven motor are considerably simpler than that associated with an EM motor. For example, an EM motor may require a high power controller, whereas the fuel-driven motor may only require a low power controller..

As such, during operation, the fuel-driven motor 652 receives fuel from the fuel control unit 606 via fuel feed lines. The fuel-driven motor 652 uses the pressurized fuel to produce mechanical torque, which in turn, drives the actuators 664 via the snubber 656, gearboxes 658, and shafts 662. In some embodiments, the snubber 656 may be omitted. The brake 654 may be provided, e.g., an EM and/or fuel driven energized brake or lock, commanded and/or powered by the low voltage controller 604. Flexible drive shafts 662 drive the gearboxes 658 mounted to the fixed structure (e.g., a stationary torque box). The gearboxes 658 may be, for example, bevel set gearboxes.

The actuators 664 function to drive the transcowls 300 in stowed and deployed positions in a synchronized manner. As described above in reference to FIGS. 3 and 4, in a first position, the transcowls 300 are pressed against one or more stow seals, the blocker doors 180 are oriented parallel to the bypass air flow path 160, and the air remains in the bypass air flow path 160. In a second position, the transcowls 300 are translated aft, causing the blocker doors 180 (FIGS. 3 and 4) to rotate into a deployed position, such that the bypass air flow path 160 is blocked, thereby creating a reverse thrust and slowing the airplane. In some embodiments, intermediate positions may also be provided. Sensors 666 may provide position and status feedback information to the FADEC 602 to determine the appropriate command. Such sensors may be, for example, RVDT, LVDT, and/or resolver assemblies to provide T/R position signals. Although not specifically shown, locks, lock sensors, and other sensors and/or safety components may be provided.

The actuators 664 are typically ballscrew actuators with the translating nut attached to the rotary/linear variable differential transformers and the ballscrew attached to the gearbox drive shaft, although other types of actuators may be provided, including electrical, mechanical, pneumatic, hydraulic, or the like, interconnected by appropriate power cables and conduits (not shown). A gimbal or other structure couples the actuators 664 to the transcowl 300. Additionally, a manual drive unit 660 mounts to the gearbox 658 and mates with a gearshaft allowing for manual extension and retraction of the transcowl 300. In one exemplary embodiment, the shafts 662 are flexible.

The fuel-driven motor 652 enables a reduction in maintenance, and typically, such motors do not need to be bled since the fuel tanks are relatively large and the fuel system will naturally bleed any air out of the system into the engine. Such an arrangement may provide a relative simple, light-weight, and low-power case assembly 110. The motor 652 may be, for example, about 14-16 hp, or between less than 2-70 hp, although any suitable size may be provided The fuel-driven motor 652 particularly uses the working fuel pressure already present in the case for the aircraft engine. In one exemplary embodiment, the fuel-driven TRAS effectively may eliminate the heavy valve equipment and aircraft supply/returns lines, as compared to a hydraulic system to result in a more integrated system. Similarly, in one exemplary embodiment, the fuel-driven TRAS effectively may eliminate the large controller and power conditioning module, large electric motor and associated large-diameter, high voltage power feed lines, as compared to a dedicated electric motor system.

Now turning to the VAFN system 114, the fuel-driven motor 682 also receives fuel from the fuel control unit 606 via fuel feed lines. The fuel-driven motor 682 uses the pressurized fuel to produce mechanical torque, which in turn, drives the actuators 694 via the snubber 686 and gearboxes 688. In some embodiments, the snubber 686 may be omitted. A brake 684 may be provided, e.g., an EM and/or fuel driven energized brake or lock commanded and/or powered by the low voltage controller 604.

The actuators 694 function to drive the nozzles 400 in stowed and deployed positions in a synchronized manner. As described above in reference to FIGS. 3 and 4, the effective flow area may be adjusted by moving the nozzle position from 0% to 100% of stroke. Sensors 696 may provide position and status feedback information to the FADEC 602. Such sensors may be, for example, RVDT, LVDT, and/or resolver assemblies to provide T/R position signals. Although not specifically shown, locks, lock sensors, and other sensors and/or safety components may be provided.

The actuators 694 are typically ballscrew actuators with the translating nut attached to the rotary/linear variable differential transformers and the ballscrew attached to the gearbox drive shaft, although other types of actuators may be provided, including electrical, mechanical, pneumatic, hydraulic, or the like, interconnected by appropriate power cables and conduits (not shown). The actuators 694 may be telescoping and/or decoupling actuators, for example, that decouple and render the nozzles 400 as fixed when the transcowl 300 is in a deployed position, e.g., exemplary embodiments provide an engaging/disengaging drive coupling with synchronized actuator locking and unlocking feature. A gimbal or other structure couples the actuators 694 to the nozzles 400. Additionally, a manual drive unit 690 mounts to the gearbox 688 and mates with a gearshaft allowing for manual extension and retraction of the nozzles 400. In one exemplary embodiment, the shafts 692 are flexible.

Similar to the fuel-driven motor 652 of the TRAS 112, the fuel-driven motor 682 of the VAFN system 114 enables a reduction in maintenance, and typically, such motors do not need to be bled. Such an arrangement may provide a relative simple, light-weight, and low power case assembly 110. The fuel-driven motor 682 particularly uses the working fuel pressure already present in the case for the aircraft engine. The motor 682 may be, for example, about 1-2 hp, or less than 10 hp, although any suitable size may be provided.

In one exemplary embodiment, the nozzle actuator 694 is operated only after the thrust reverser transcowls 300 are stowed and locked. At that time, the drive coupling engages the gearbox on the fixed torque box to the nozzle actuator 694 and simultaneously unlocks the actuator 694 to enable fan nozzle operation during takeoff, cruise, and prior to landing/reverser operation. When the aircraft lands and the thrust reverser transcowl 300 is commanded to deploy, the drive coupling disengages and the nozzle actuator 694 is locked. As noted above, independent arrangements may be provided. For example, although the depicted embodiment illustrates the actuators 694 mounted on the transcowls 300, the actuators 694 may be mounted on a torque box of the engine. As shown, the FADEC 602, controller 604, and fuel control unit 606 are common to both the VAFN 114 and TRAS 112. Common control components may reduce cost, complexity, weight, and space by avoiding unnecessary duplication of equipment and connections.

As noted above, the FADEC 602, controller 604, and fuel control unit 606 may include any component suitable for carrying out the functions described above. For example, such embodiments disclosed herein may be implemented or performed with The various logical blocks, modules, and circuits, including a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A case assembly (110) for an aircraft, comprising:
a thrust reverser actuation system (TRAS) (112) configured to provide braking assistance to the aircraft;
a variable area fan nozzle (VAFN) system (114) configured to adjust an engine exhaust of the aircraft; and
a common control group (608) coupled to the TRAS (112) and the VAFN system (114) for controlling operation of the TRAS (112) and the VAFN system (114).

2. The case assembly (110) of claim 1, wherein the common control group (608) includes a Full Authority Digital Engine Controller (FADEC) (602).

3. The case assembly (110) of claim 2, wherein the FADEC (602) is configured to provide deploy and retract commands to the TRAS (112) and the VAFN system (114).

4. The case assembly (110) of claim 3, wherein the common control group (608) further includes a low voltage controller (604).

5. The case assembly (110) of claim 4, wherein the low-voltage controller (604) is a 28VDC controller (604).

6. The case assembly (110) of claim 4, wherein the low-voltage controller (604) includes a common EMI filter associated with the TRAS (112) and the VAFN system (114).

7. The case assembly (110) of claim 4, wherein the TRAS (112) includes a first motor (652) and the VAFN system (114) includes a second motor (682), and wherein low voltage controller (604) is configured to provide motor command signals based on deploy and retract commands from the FADEC (602).

8. The case assembly (110) of claim 7, wherein the first motor (652) is a first fuel-driven motor (652) and the second motor (682) is a second fuel-driven motor (682), and wherein the common control group (608) further includes a fuel control unit (606) configured to provide fuel to the first fuel-driven motor (652) and the second fuel-driven motor (682) based on motor commands from the low voltage controller (604).

9. The case assembly (110) of claim 8, wherein the first motor (652) is configured to output a torque.

10. The case assembly (110) of claim 9, wherein the TRAS (112) includes a linear actuator (694) driven by the torque.
